# EUROPEAN PATENT APPLICATION

(11) **EP 4 796 331 A1**
(43) Date of publication of application: **26.08.2026**
(21) Application number: 26159552.4
(22) Date of filing: 19.02.2026
(51) Int. Cl.: B41J 2/21

(54) **RECORDING APPARATUS, METHOD FOR RECORDING APPARATUS, AND COMPUTER PROGRAM**

(30) Priority: 21.02.2025 JP 2025027216
(71) Applicant: Canon Kabushiki Kaisha, Tokyo 146-8501 (JP)
(72) Inventor: NAKATSUKA, Yutaro, Tokyo (JP); EDAMURA, Tetsuya, Tokyo (JP); OHNISHI, Toru, Tokyo (JP); ORIHARA, Tatsuaki, Tokyo (JP); NARUMI, Kazuki, Tokyo (JP); KOHASHI, Yohei, Tokyo (JP); YAMAMOTO, Akira, Tokyo (JP)
(74) Representative: WESER & Kollegen Patentanwälte PartmbB

(57) **Abstract**

A recording apparatus (501) comprises a recording means (507) recording a test pattern on a recording medium (1001), the test pattern includes a recording patch in which a color ink containing a colorant and a reaction liquid containing a reaction component that aggregates the colorant are recorded so as to overlap each other; and a region in which the color ink is recorded around the recording patch and a control means (531) setting, according to a permeation property of the reaction liquid for the medium, an application amount of the reaction liquid per unit area to record the recording patch on the medium. The control means detects a recording patch position in an image obtained by reading the medium on which the test pattern is recorded and determine, based on the recording patch position, an adjustment value for adjusting a recording position of the reaction liquid.

## Description

### TECHNICAL FIELD

The present disclosure relates to a recording apparatus, a method, and a computer program.

### BACKGROUND

High-quality image formation is required for an inkjet recording apparatus (hereinafter referred to as a recording apparatus) that performs recording on a recording medium using an inkjet method. Therefore, the recording apparatus needs to cause ink to accurately land on a desired recording position on the recording medium. However, the positions of nozzles arranged in a recording head and the attachment position of the recording head are displaced from the ideal nozzle positions and the ideal attachment position, respectively. Thus, there are errors in the nozzle positions and the attachment position of the recording head. Therefore, it is necessary to adjust the displacement of the recording position caused by errors in the nozzle positions and the attachment position of the recording head.

For example, according to Japanese Patent Laid-Open No. 2014-091304, from an image obtained by reading test patterns used for recording position adjustment using a reading device such as a scanner, the pattern positions are detected using template matching. Also, Japanese Patent Laid-Open No. 2014-091304 proposes to perform the recording position adjustment based on a relative position between the patterns.

Hereinafter, a pattern disposed in a test pattern to perform analysis such as template matching is specifically referred to as a "recording patch".

### SUMMARY

Japanese Patent Laid-Open No. 2014-091304 does not disclose, as a recording position adjustment method, either a recording method or a detection method of a recording patch of a colorless and transparent reaction liquid, and therefore it is not possible to adjust the recording position of the reaction liquid. On the other hand, as a method for detecting the reaction liquid, there is known a method in which a color ink is applied to a region including the entire recording patch recorded with the reaction liquid, and the recording position of the reaction liquid is detected from the difference in degree of aggregation of the color ink and the reaction liquid. However, in order to make a difference in a degree of aggregation sufficient to be detectable, it is necessary to finely adjust the application amount of the reaction liquid per unit area. Moreover, the necessary application amount varies depending on the difference in permeability of the recording medium. For example, when the application amount of the reaction liquid is insufficient, it is difficult to distinguish between a region in which the reaction liquid is applied and a region in which no reaction liquid is applied, resulting in the possibility of detection errors. Conversely, when the application amount of the reaction liquid is excessive, the boundary between the region in which the reaction liquid is applied and the region in which no reaction liquid is applied becomes blurred due to excessively strong aggregation, thus possibly causing a reduction in the calculation accuracy of the recording position.

Therefore, the present disclosure provides a technique for adjusting a recording position of a reaction liquid on a recording medium with high accuracy, regardless of the type of the recording medium.

The present disclosure in its first aspect provides an exposure apparatus as specified in claim 1. Optional features are specified in claim 2 to 6.

The present disclosure in its second aspect provides a method for a recording apparatus as specified in claim 7.

The present disclosure in its third aspect provides a computer program as specified in claim 8.

According to the present disclosure, the recording position of a reaction liquid on a recording medium can be adjusted with high accuracy regardless of the type of the recording medium.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a cross-sectional view showing an internal configuration of a recording apparatus according to a first embodiment.
FIG. 2 is a perspective view illustrating structures around a recording unit according to the first embodiment.
FIG. 3 is a perspective view illustrating an elevation mechanism of a recording head according to the first embodiment.
FIG. 4 is a diagram illustrating test patterns for correcting positional displacement of a recording head according to the first embodiment.
FIG. 5 shows enlarged views of pattern matching patterns 1022 and 1023.
FIG. 6 is a diagram showing a relationship between patterns 1016 and 1019 corresponding to a recording chip, and ejection nozzles.
FIG. 7 is a diagram illustrating a method for calculating an inter-color deviation amount according to the first embodiment.
FIG. 8 is a diagram illustrating a method for calculating a deviation amount between nozzle arrays according to the first embodiment.
FIG. 9A is a diagram illustrating a method for calculating an inter-chip deviation amount and a tilt amount of a recording head according to the first embodiment.
FIG. 9B is a diagram illustrating a method for calculating an inter-chip deviation amount and a tilt amount of a recording head according to the first embodiment.
FIG. 10 is a diagram illustrating a method for calculating a deviation amount between recording heads according to the first embodiment.
FIG. 11 is a diagram illustrating processing for detecting a detection mark, an alignment mark, and a pattern matching pattern according to the first embodiment.
FIG. 12A is an overall flowchart for illustrating processing for adjusting a recording position of a reaction liquid according to the first embodiment.
FIG. 12B is a flowchart for illustrating pattern analysis processing in S104 illustrated in FIG. 12A.
FIG. 13A shows a pattern matching pattern in which an application amount of the reaction liquid is small.
FIG. 13B shows a pattern matching pattern in which an application amount of the reaction liquid is large.
FIG. 14A is an overall flowchart for illustrating processing for adjusting a recording position of a reaction liquid according to a second embodiment.
FIG. 14B is a flowchart for illustrating pattern selection processing in S201 illustrated in FIG. 14A.
FIG. 14C is a flowchart for illustrating pattern analysis processing in S204 illustrated in FIG. 14A.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

For example, the dimensions, the materials, and the shapes of constituent parts described in the following embodiments, and the relative arrangements and the like of the constituent parts can be changed as appropriate according to configurations and various conditions of apparatuses to which the present disclosure is applied. Unless specifically stated otherwise, the present disclosure is not limited to the following embodiments.

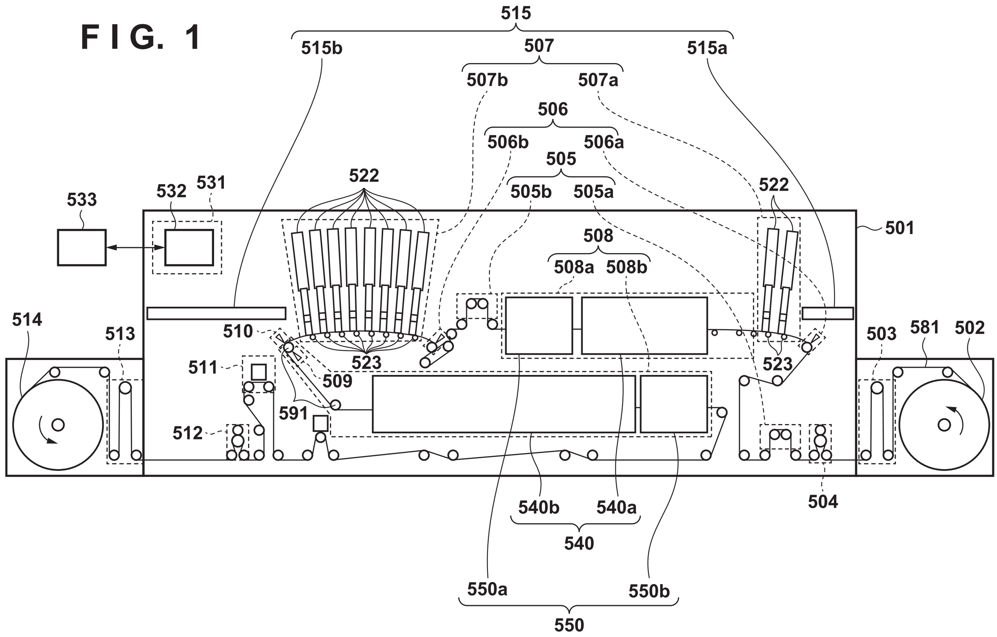

FIG. 1 is a cross-sectional view showing an internal configuration of a recording apparatus 501 according to the first embodiment.

The definitions of directions used in the description of FIG. 1 are as follows. The term "upward" refers to upward of the recording apparatus 501, or in other words, the upward direction on the plane of the paper. The term "longitudinal direction" refers to the left-right direction on the plane of the paper. The term "sheet width direction" refers to a direction from the near side on the plane of the paper toward the far side on the plane of the paper. The term "sheet conveyance direction" refers to the left-right direction on the plane of the paper. The sheet conveyance direction is orthogonal to the sheet width direction.

### Recording Apparatus

The recording apparatus 501 is an inkjet recording apparatus, and may be, for example, a high-speed line printer that performs recording on a recording medium (a continuous sheet wound in a roll). The recording apparatus 501 according to an embodiment is a line printer. A line printer is an apparatus that performs recording on a recording medium (e.g., a continuous sheet), using line heads (recording heads 522 of a recording unit 507 described below) each having a length corresponding to the width of the recording medium. The line printer can be suitably used, for example, in the fields that require mass printing, such as commercial printing applications. Note that the recording apparatus 501 is not limited to a line printer, and may be a serial printer that performs recording while the recording heads repeatedly move in a direction orthogonal to the conveyance direction of the recording medium. The recording apparatus 501 includes an unwinding roll unit 502, a first dancer unit 503, a first main conveyance unit 504, a meander correction unit 505, a conveyance detection unit 506, a recording unit 507, a conveyance tension detection unit 509, a recorded image position detection unit 510, a scanner unit 511, a second main conveyance unit 512, a second dancer unit 513, a winding roll unit 514, a maintenance unit 515, and a fixing unit 508. The fixing unit 508 includes a drying unit 540 and a cooling unit 550. A sheet 581 serving as a recording medium is conveyed along a sheet conveyance path indicated by the solid line in FIG. 1, and is processed by the various units.

Recording steps performed by the recording apparatus 501 include a first recording step and a second recording step. In the first recording step, an image that has passed through a first recording unit 507a and a first fixing unit 508a and been fixed to the sheet 581 is recorded. In the second recording step, an image that has passed through a second recording unit 507b and a second fixing unit 508b and been fixed to the sheet 581 processed in the first recording step is recorded.

In this manner, the recording apparatus 501 can continuously record an image on the sheet 581 by performing predetermined processing on the sheet 581 in the first recording step and the second recording step. In addition, the recording apparatus 501 can alternatively determine the recording steps according to the recording condition. In this case, the recording apparatus 501 records an image on the sheet 581 by performing only the selected recording step.

The unwinding roll unit 502 is a unit for holding the continuous sheet (sheet 581) wound in a roll, and supplying the sheet 581. The unwinding roll unit 502 accommodates an unwinding roll, and draws out the unwinding roll, to supply the sheet 581. Note that the number of unwinding rolls that the unwinding roll unit 502 can accommodate is not limited to one. For example, the unwinding roll unit 502 may accommodate two or more unwinding rolls, and alternatively draw out one of the two or more unwinding rolls, to supply the sheet 581.

The first dancer unit 503 is a unit for applying a fixed tension to the sheet 581 between the unwinding roll unit 502 and the first main conveyance unit 504. The first dancer unit 503 uses a tension application unit (not shown) to apply the tension to the sheet 581.

The first main conveyance unit 504 is a unit for feeding the sheet 581 into the units provided along the sheet conveyance path, and applying the tension to the sheet 581 between the second main conveyance unit 512 and itself. The first main conveyance unit 504 is rotated by driving a motor (not shown) to convey the sheet 581.

The meander correction unit 505 is a unit for correcting the meandering in a sheet width direction (a direction from the near side of the plane of the paper toward the far side of the plane of the paper) during conveyance of the sheet 581. The meander correction unit 505 includes a first meander correction unit 505a and a second meander correction unit 505b on the upstream side of the respective recording steps in the conveyance path of the sheet 581. The meander correction unit 505 includes a meandering correction roller, and a meandering detection sensor (not shown) that detects meandering of the sheet 581. The meandering correction roller can change the tilt of the sheet 581 using a motor (not shown). Based on a measurement result obtained by the meandering detection sensor, the meandering correction roller corrects the meandering of the sheet 581. By winding the sheet 581 around the meandering correction roller, it is possible to enhance the meandering correction function.

The conveyance detection unit 506 is a unit for detecting the conveyance speed of the sheet 581, and marks printed in advance on the sheet 581, in order to control the image forming timing of the recording unit 507. The conveyance detection unit 506 includes a first conveyance detection unit 506a and a second conveyance detection unit 506b on the upstream side of the respective recording steps in the conveyance path of the sheet 581. The first conveyance detection unit 506a and the second conveyance detection unit 506b are used for controlling the image forming timing of the first recording unit 507a and the second recording unit 507b, respectively.

The recording unit 507 applies a liquid composition (a color ink, a reaction liquid, etc.) to the sheet 581 using recording heads 522 located above the sheet 581 being conveyed, to form an image on the sheet 581. In the present specification, the recording unit 507 is a "recording unit" configured to record a test pattern on the recording medium (sheet 581). The sheet conveyance path in the vicinity of the recording unit 507 is formed by guide rollers 523 disposed in an upwardly protruding arc shape. As a result of a fixed tension being applied to the sheet 581, a clearance (gap) between the sheet 581 and the recording heads 522 is secured.

The plurality of recording heads 522 are disposed along the conveyance direction of the sheet 581. The first recording unit 507a includes a total of two line-type recording heads corresponding to white (W) ink and a reaction liquid. The second recording unit 507b includes a total of eight line-type recording heads corresponding to four color inks (also simply referred to as inks), namely, black (K), yellow (Y), magenta (M), and cyan (C) inks, a reaction liquid, and three spot color inks.

Here, a "reaction liquid" is a liquid containing a component that causes an increase in the viscosity of an ink. The expression "causes an increase in the viscosity of an ink" refers to a state in which a colorant, a resin, and the like constituting the ink come into contact with the component that causes an increase in the viscosity of the ink, and cause chemical reaction with or physical adsorption to the component, thus exhibiting a rise in the viscosity of the ink. An increase in the viscosity of an ink is not limited to an increase in the overall viscosity of the ink, but also includes a local viscosity rise due to partial aggregation of components such as a colorant and a resin that constitute the ink.

Examples of the component that causes an increase in the viscosity of an ink include, but are not particularly limited to, metal ions and a polymer coagulant. The component that causes an increase in the viscosity of an ink is a substance that causes a pH change in the ink to aggregate the colorant of the ink, and may be an organic acid, for example. By applying the reaction liquid to the sheet 581 before applying an ink to the sheet 581, the ink that has landed on the sheet 581 can be immediately fixed. This makes it possible to suppress bleeding in which mixing of adjacent inks on the sheet 581 occurs. Note that the type and the number of colors, and the number of recording heads 522 are not particularly limited.

Examples of the inkjet method include a method using heating elements, a method using piezoelectric elements, a method using electrostatic elements, and a method using micro electro mechanical systems (MEMS) elements. The inks are supplied to the recording heads 522 from ink tanks (not shown) via ink tubes (not shown).

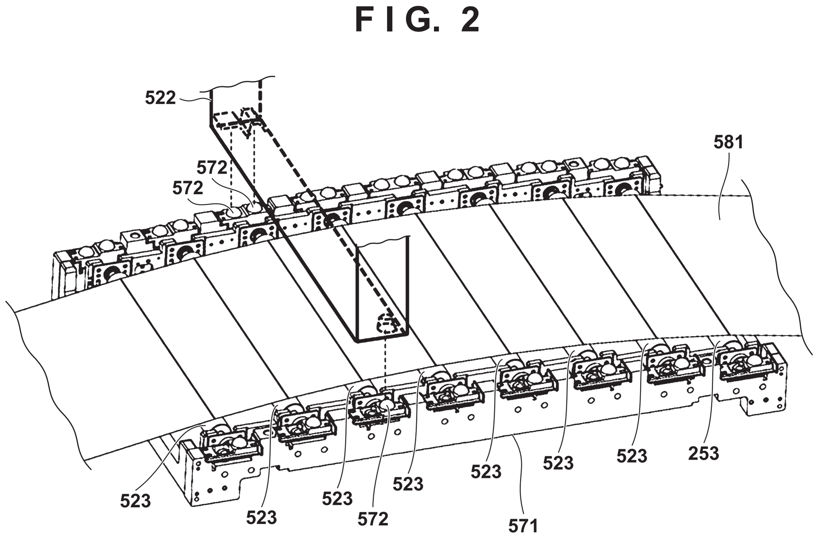

FIG. 2 is a perspective view illustrating structures around the recording unit 507 according to the first embodiment.

A plurality of recording head positioning members 572 are disposed in a sheet conveyance unit casing 571 of the recording unit 507. The recording head positioning members 572 are members for positioning the recording heads 522. Two recording head positioning members 572 are disposed on one end side (the upper side on the plane of the paper) of each of the recording heads 522. One recording head positioning member 572 is disposed on the other end side (the lower side on the plane of the paper) of each of the recording heads 522.

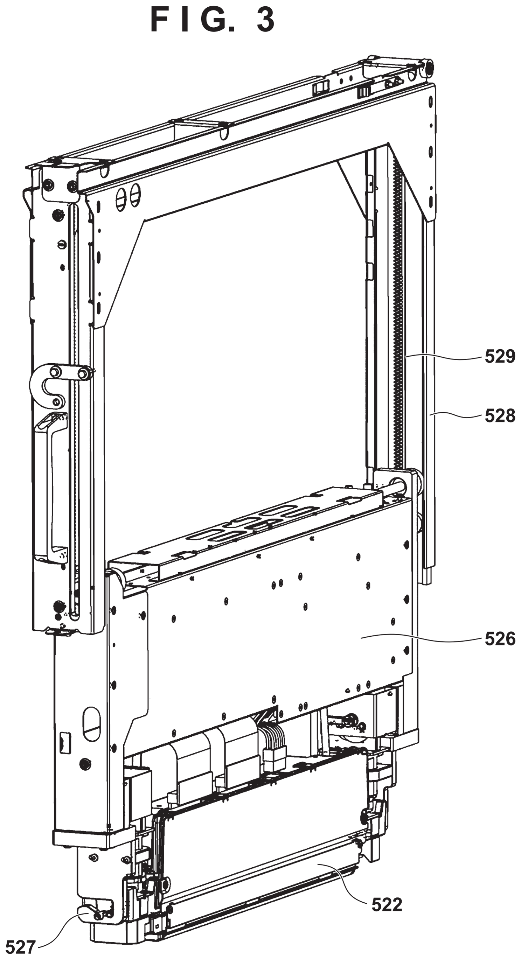

FIG. 3 is a perspective view illustrating an elevation mechanism of a recording head 522 according to the first embodiment.

The recording head 522 is pivotably supported by a recording head support shaft 527 so as to support a recording head holding unit 526 from below. The recording head holding unit 526 is a member for moving the recording heads 522 up and down while holding the recording heads 522. The recording head holding unit 526 uses a drive mechanism (not shown) included inside the recording head holding unit 526 to perform the operation of moving up and down along elevation rails 529 provided in the recording head elevation frame 528.

Although the recording unit 507 applies inks to the sheet 581 using the recording heads 522, the method by which the recording unit 507 applies inks to the sheet 581 is not limited thereto. The recording unit 507 may apply inks to the sheet 581 by means of at least one selected from, for example, a roller, a die coating device (die coater), and a blade coating device (blade coater). Here, the description returns to FIG. 1.

The conveyance tension detection unit 509 is a unit for detecting the tension of the sheet 581 while the sheet 581 is conveyed between the first main conveyance unit 504 and the second main conveyance unit 512.

The recorded image position detection unit 510 is a unit configured to detect, during printing, a deviation of an image recorded on the sheet 581 by the recording unit 507, and correct the print setting.

Winding guide rollers 591 are rollers around which, at a predetermined winding angle, a surface of the sheet 581 that is opposite to the ink-applied surface thereof at a position downstream of the second recording unit 507b is wound. The two winding guide rollers 591 are disposed between the second recording unit 507b and a second drying unit 540b. The sheet 581 is returned back, substantially parallel in the up-down direction on the plane of the paper. The second drying unit 540b is disposed below the recording unit 507b.

A first drying unit 540a and the second drying unit 540b are units that reduce the liquid content of a liquid composition (ink) applied to the sheet 581 by the recording unit 507, and increase the fixability of the ink to the sheet 581. The drying unit 540 blows air to the sheet 581 on which the image is recorded, to dry the ink. The drying unit 540 blows air to the sheet 581 passing through the inside of the drying unit 540, at least from the ink-applied surface side, to dry the ink-applied surface of the sheet 581. Note that the method for drying the ink applied to the sheet 581 is not limited to the method involving blowing air, and may be, for example, a method in which the surface of the sheet 581 is irradiated with electromagnetic waves such as ultraviolet rays or infrared rays, a conduction heat transfer method using contact with a heating element, and a combination of these methods.

A first cooling unit 550a and a second cooling unit 550b cool the sheet 581 to which the drying unit 540 has fixed the ink, thus solidifying the softened ink. Furthermore, the first cooling unit 550a and the second cooling unit 550b suppress the amount of temperature change of the sheet 581 in a downstream step in the recording apparatus 501. The cooling unit 550 blows air at a temperature lower than that of the sheet 581, from at least the ink-applied surface side, to the sheet 581 passing through the inside of the cooling unit 550. This enables the cooling unit 550 to cool the ink-applied surface of the sheet 581. Note that the method for cooling the sheet 581 is not limited to a method involving blowing air, and may be, for example, a conduction heat transfer method using contact with a heat dissipation member, and a combination of these methods.

The scanner unit 511 reads, prior to printing, a test image formed on the sheet 581 by the recording unit 507, and detects a deviation and a density of the image. The scanner unit 511 is a unit that performs correction of printing.

The second main conveyance unit 512 conveys the sheet 581 between the first main conveyance unit 504 and the second main conveyance unit 512 while applying a tension to the sheet 581. In this manner, the second main conveyance unit 512 is a unit that adjusts the tension of the sheet 581. The second main conveyance unit 512 is rotated by the driving force of a motor (not shown). The second main conveyance unit 512 controls the speed of the second main conveyance unit 512 using a tension control unit (not shown), based on a tension value detected by the conveyance tension detection unit 509.

Note that an additional configuration for adjusting the tension of the sheet 581 may be provided. For example, a drivingly coupled clutch (not shown) that can control the torque may adjust the tension of the sheet 581. In this case, the method for controlling the tension of the sheet 581 includes a torque control method in which the value of a torque transmitted from the clutch is controlled, and a speed control method in which the speed of the roller of the second main conveyance unit 512 is controlled. Depending on the purpose, the above-described two tension control methods may be switched, or may be used simultaneously.

The second dancer unit 513 is a unit for applying a fixed tension to the sheet 581 between the second main conveyance unit 512 and the winding roll unit 514. The second dancer unit 513 uses a tension application unit (not shown) to apply the tension to the sheet 581.

The winding roll unit 514 is a unit for winding up, around a roll core, the sheet 581 on which an image has been recorded. The number of roll cores around which the sheet 581 can be collected is not limited to one, and may be two or more. In this case, a plurality of roll cores may be switched to a roll core alternatively selected therefrom, and the sheet 581 may be collected using the selected roll core. Note that, depending on the content of the post-recording process, the configuration for winding up the sheet 581 around the roll core is not essential. For example, a cutter may be used to cut the sheet 581, and the cut sheets 581 may be stacked in a sheet collection unit (not shown).

The control unit 531 is a unit that performs overall control of the various configurations of the recording apparatus 501. The control unit 531 includes a CPU, a storage device (a RAM, a ROM, an HDD, etc.), a controller including various types of control units, an external interface, and an operation unit 532 via which a user performs input and output. The operations of the recording apparatus 501 are controlled based on commands from the controller, or from a host apparatus 533 such as a host computer connected to the controller via an external interface.

The maintenance unit 515 is a unit including a mechanism for recovering the ejection performance of the recording heads 522. Examples of the mechanism for recovering the ejection performance of the recording heads 522 include a cap mechanism for protecting the ink ejection surface of each of the recording heads 522, a wiper mechanism for wiping the ink ejection surface, and a suction mechanism for sucking the ink in the recording head 522 from the ink ejection surface under a negative pressure. In addition, the maintenance unit 515 includes a drive mechanism (not shown) and rails (not shown), and can be reciprocated in a horizontal direction along the rails. At the time of maintenance of each of the recording heads 522, the maintenance unit 515 is moved to a location directly below the recording head 522. When maintenance of the recording head 522 is not performed, the maintenance unit 515 is moved to a position retracted from the location directly below the recording head 522. In FIG. 1, a first maintenance unit 515a and a second maintenance unit 515b respectively corresponding to the first recording unit 507a and the second recording unit 507b are provided.

### First Embodiment

### Method for Correcting Positional Displacement of Recording Head 522

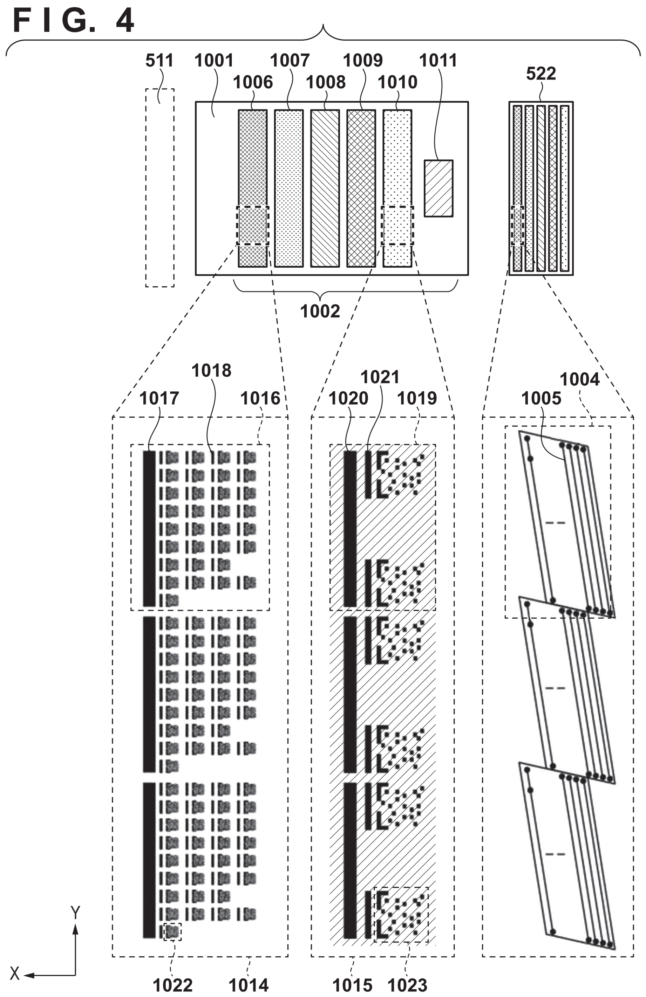

FIG. 4 is a diagram illustrating test patterns for correcting positional displacement of a recording head according to the first embodiment.

In FIG. 4, the conveyance direction of a recording medium 1001 is defined as an "X direction (indicated by X)", and a nozzle array direction of the recording head 522 is defined as a "Y direction (indicated by Y)". Note that the definitions of an X direction (indicated by X) and a Y direction (indicated by Y) shown in the drawings following FIG. 4 are the same as the definitions of the X direction (indicated by X) and the Y direction (indicated by Y) in FIG. 4.

FIG. 4 shows an example in which a test pattern 1002 for correcting positional displacement of the recording head 522 is recorded using the recording medium 1001 (the sheet 581 shown in FIG. 1). The following description will be given assuming that a region that covers the test pattern 1002 corresponds to one page. Note that, as described previously, the sheet 581 is continuous, and the region that covers the test pattern 1002 is not cut out from the sheet 581.

As shown in FIG. 1, the recording apparatus 501 includes a plurality of recording heads 522, and applies inks to the recording medium 1001 using an inkjet method. Each recording head 522 is compatible with color inks of white (W), black (K), cyan (C), magenta (M), and yellow (Y), and also with a reaction liquid (also referred to as a primer ink), which is a colorless and transparent ink. Note that the recording heads 522 may be empty sockets, or may be compatible with spot color inks and the like.

The scanner unit 511 is located on the downstream side of the conveyance direction (X direction) of the recording medium 1001 relative to the recording heads 522. To detect the amount of positional displacement of each recording head 522, the scanner unit 511 reads the test pattern 1002 recorded on the recording medium 1001. The scanner unit 511 includes, for example, an image sensor such as a CCD sensor or a CMOS sensor, and captures the recorded image. Note that the method for reading the recording position of the recording medium 1001 is not limited thereto. For example, it is possible to use a method in which the density of an image on the recording medium 1001 is measured using a density sensor (not shown), and the recording position is read based on a result of the measurement.

Each recording head 522 includes a configuration in which a plurality of recording chips 1004 on each of which recording elements and ejection ports are formed on a silicon substrate are arranged in the width direction (Y direction) of the recording medium 1001. Each recording chip 1004 (indicated by the broken line) indicates one recording chip. Each recording chip 1004 has the shape of a parallelogram. In each recording head 522, 17 recording chips 1004 are disposed along the direction of nozzle arrays 1005. Note that the number of recording chips 1004 may be any number.

A plurality of nozzle arrays 1005 are disposed on each recording chip 1004. For example, 24 nozzle arrays 1005 are disposed on the recording chip 1004. However, the number of nozzle arrays 1005 may be any number.

As shown in FIG. 4, the nozzle arrays 1005 are arranged on the recording chip 1004 at a predetermined angle relative to the conveyance direction (X direction). In addition, ends of the nozzle arrays 1005 are inclined relative to the conveyance direction (X direction).

The types of positional displacement of the recording head 522 will be described below. The positional displacement of the recording head 522 occurs due to a formation error of the recording chips 1004 and the nozzles of the recording head 522, or an installation error or the like of the recording head 522. Examples of the types of positional displacement of the recording head 522 include inter-array deviation between the nozzle arrays 1005 of the recording chip 1004, inter-chip deviation between the recording chips 1004, and inter-color deviation between the recording heads 522. When there is such positional displacement of the recording head 522, the ink jetting positions are displaced from ideal positions, resulting in a deterioration in quality of a recorded image.

The "head position displacement correction" refers to a function for correcting the ink jetting positions by changing the ink ejection timing of the recording chip 1004, or changing the nozzles that perform ink ejection.

The displacement between the direction of the nozzle arrays 1005 and an orthogonal direction can be corrected by changing the respective ejection timings of the plurality of recording chips 1004 of the recording head 522. The positional displacement of the direction of the nozzle arrays 1005 can be corrected by changing ink ejection data.

The test pattern 1002 is a test pattern for performing head position displacement correction of the recording heads 522. Test patterns 1006 to 1010 are test patterns corresponding to five heads (five recording heads 522). Each of the test patterns 1006 to 1010 is used to detect the amount of positional displacement of the corresponding recording head 522. These test patterns are used to calculate the amount of inter-array deviation between the nozzle arrays 1005 of the recording chip 1004 of the corresponding recording head 522, and the amount of inter-chip deviation between the recording chips 1004.

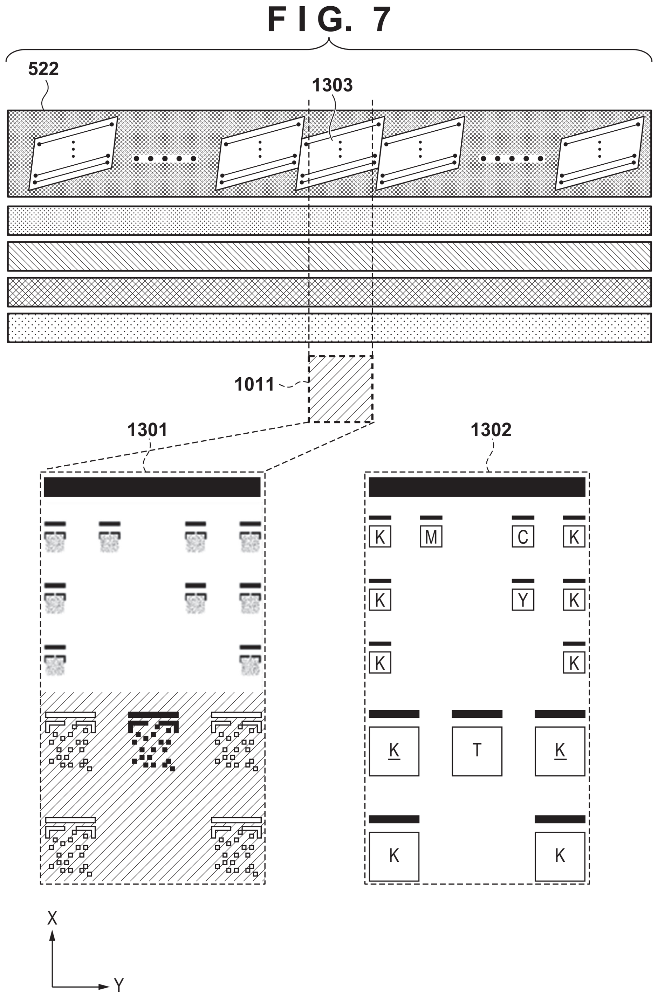

The test patterns 1006 to 1010 are test patterns corresponding to the recording heads 522 of K, C, M, and Y, and the reaction liquid, respectively. The number of test patterns of the recording head 522 that are included in the test pattern 1002 may be a number corresponding to less than five heads, or greater than or equal to five heads. The order of recording of test patterns of the plurality of recording heads 522 may be freely changed. Accordingly, the number of test patterns may vary according to the number of recording heads 522 to be tested. In addition, a test pattern 1011 is a test pattern for calculating an inter-color deviation amount between the recording heads 522. The test pattern 1011 will be described in detail with reference to FIG. 7.

A pattern 1014 is an enlarged view of a part of the test pattern 1006 that corresponds to the ink color K. The test patterns 1007 to 1009 respectively corresponding to the ink colors C, M, and Y have configurations similar to that of the test pattern 1006.

A pattern 1015 is an enlarged view of a part of the test pattern 1010 that corresponds to the reaction liquid. Note that the test patterns are not limited to the examples shown in FIG. 4, and the correspondence relationship between the test patterns and the respective corresponding colors may be changed according to the type of the recording head 522.

The pattern 1015 is a pattern made larger than the pattern 1014. A description will be given of a configuration for ensuring the detection accuracy of the recording position of the reaction liquid even when the difference in luminance value between the base color of the recording medium 1001 and the reaction liquid is small. The K ink is uniformly recorded on the entire surface of the hatched region of the pattern 1015. The hatched region includes regions in which a detection mark 1020, an alignment mark 1021, or a pattern matching pattern 1023 overlap the K ink. Here, it is assumed that the detection mark 1020, the alignment mark 1021, and the pattern matching pattern 1023 are recorded with the reaction liquid.

This results in formation of portions in which only the K ink is applied to the recording medium 1001, and portions in which both the K ink and the reaction liquid are applied to the recording medium 1001 to cause aggregation reaction. Also, differences in detected luminance are created at the portions of the detection mark 1020, the alignment mark 1021, and the pattern matching pattern 1023.

Note that the method for ensuring the detection accuracy of the recording position of the reaction liquid is not limited to the method that utilizes the aggregation reaction between the K ink and the reaction liquid. Examples of other methods may include a method in which a portion in which the K ink and a small amount of the reaction liquid are applied, and a portion in which the K ink and a large amount of the reaction liquid are applied, thus forming a plurality of portions (here, two portions) that differ in degree of aggregation of the reaction liquid and the K ink.

A pattern 1016 is a pattern corresponding to one recording chip 1004 included in the recording heads 522 of the ink colors K, C, M, and Y. A pattern 1019 is a pattern corresponding to one recording chip 1004 included in the recording head 522 of the reaction liquid.

In the patterns 1014 and 1015, the regions depicted in black indicate regions recorded with the corresponding inks. The regions depicted in white are regions in the base color of the recording medium 1001 and in which no ink is recorded.

Each recording head 522 has a configuration in which a plurality of recording chips 1004 are linearly arrayed along the direction of the nozzle arrays 1005. For each recording chip 1004 of the recording head 522, the pattern 1016 or 1019 corresponding to the recording chip 1004 is linearly recorded in parallel to the direction of the nozzle arrays 1005.

The configuration and the recording method of the patterns 1016 and 1019 corresponding to the recording chip 1004 will be described.

One pattern 1016 corresponding to one recording chip 1004 of a recording head 522 that ejects a color ink includes a detection mark 1017, alignment marks 1018, and pattern matching patterns 1022. The pattern matching patterns 1022 are recording patches to be used in pattern matching for calculating a positional displacement amount.

One pattern 1019 corresponding to one recording chip 1004 of a recording head 522 that ejects the reaction liquid includes a detection mark 1020, alignment marks 1021, and pattern matching patterns 1023. The pattern matching patterns 1023 are recording patches to be used in pattern matching for calculating a positional displacement amount.

The detection marks 1017 and 1020 are used for detecting patterns corresponding to the recording chips 1004 in a read image in image analysis processing. The detection marks 1017 and 1020 are rectangular regions shown in FIG. 4. In the present embodiment, each recording chip 1004 is composed of a plurality of nozzle arrays 1005, as described above. The detection marks 1017 and 1020 are recorded by jetting the inks by the plurality of nozzle arrays 1005. By recording the inks using the plurality of nozzle arrays 1005, the inks can be jetted by nozzles of the other nozzle arrays 1005 even if there are non-ejection nozzles. This reduces omission of the detection mark caused by the non-ejection nozzles. Accordingly, the detection marks 1017 and 1020 can be stably detected in image analysis processing.

The alignment marks 1018 and 1021 are used for calculating reference positions of analysis regions of the pattern matching patterns 1022 and 1023 in image analysis processing. The alignment marks 1018 and 1021 are rectangular regions as shown in FIG. 4. The alignment marks 1018 and 1021 are each recorded for one pattern matching pattern 1022 or 1023 corresponding to each nozzle array 1005 by jetting the inks by a plurality of nozzle arrays 1005.

The pattern matching patterns 1022 and 1023 are used for detecting the positional displacement of the recording head 522 in image analysis processing. The pattern matching patterns 1022 and 1023 are selectively used according to the printing color and the type of head position displacement to be calculated.

In patterns recorded with the reaction liquid, a signal difference between the luminance values of the base color of the recording medium 1001 and the color (transparent) of the reaction liquid is less likely to occur. That is, it is difficult to detect a difference between the luminance values of the base color of the recording medium 1001 and the color of the reaction liquid. Accordingly, in the present embodiment, the pattern matching patterns 1023, which are larger than the pattern matching patterns 1022, are used to detect the positional displacement of the recording head 522 of the reaction liquid.

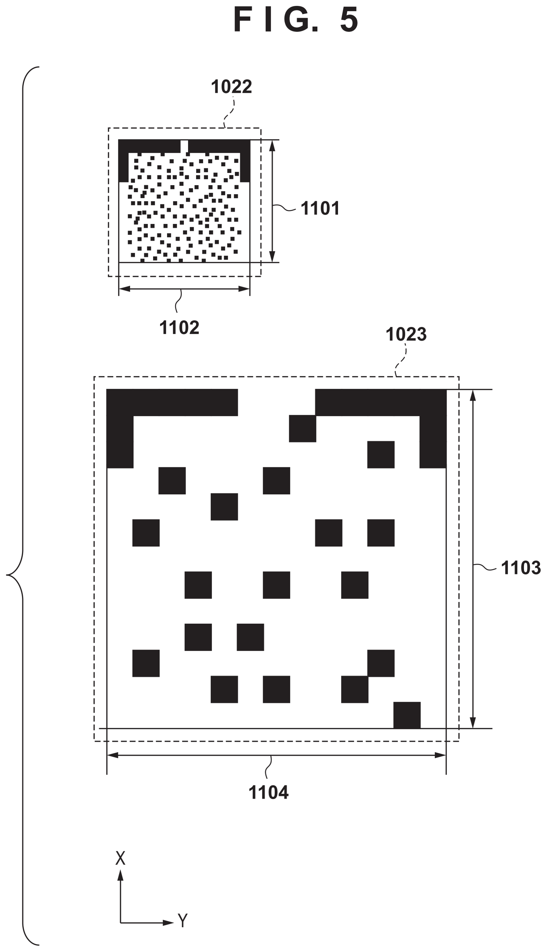

FIG. 5 shows enlarged views of the pattern matching patterns 1022 and 1023.

The pattern matching pattern 1022 includes vertical sides 1101 and horizontal sides 1102. The vertical sides 1101 represent the number of pixels in the vertical direction in the pattern matching pattern 1022. The horizontal sides 1102 represent the number of pixels in the horizontal direction.

The pattern matching pattern 1023 includes vertical sides 1103 and horizontal sides 1104. The vertical sides 1103 represent the number of pixels in the vertical direction in the pattern matching pattern 1023. The horizontal sides 1104 represent the number of pixels in the horizontal direction.

In the present embodiment, the vertical sides 1101 of the pattern matching pattern 1022 are parallel to the conveyance direction (X direction). The horizontal sides 1102 are parallel to the nozzle array direction (Y direction). Each of the numbers of pixels in the vertical direction and the horizontal direction is 82 pixels in units of 1200 dots per inch (DPI).

The vertical sides 1103 of the pattern matching pattern 1023 are parallel to the conveyance direction (X direction). The horizontal sides 1104 are parallel to the nozzle array direction (Y direction). Each of the numbers of pixels of the vertical direction and the horizontal direction is 210 pixels in units of 1200 dots per inch (DPI).

Note that the numbers of pixels constituting the pattern matching patterns 1022 and 1023 are not limited to the above-described numbers, and may be any number of pixels. In FIG. 5, the pattern matching pattern 1022 has a size smaller than that of the pattern matching pattern 1023.

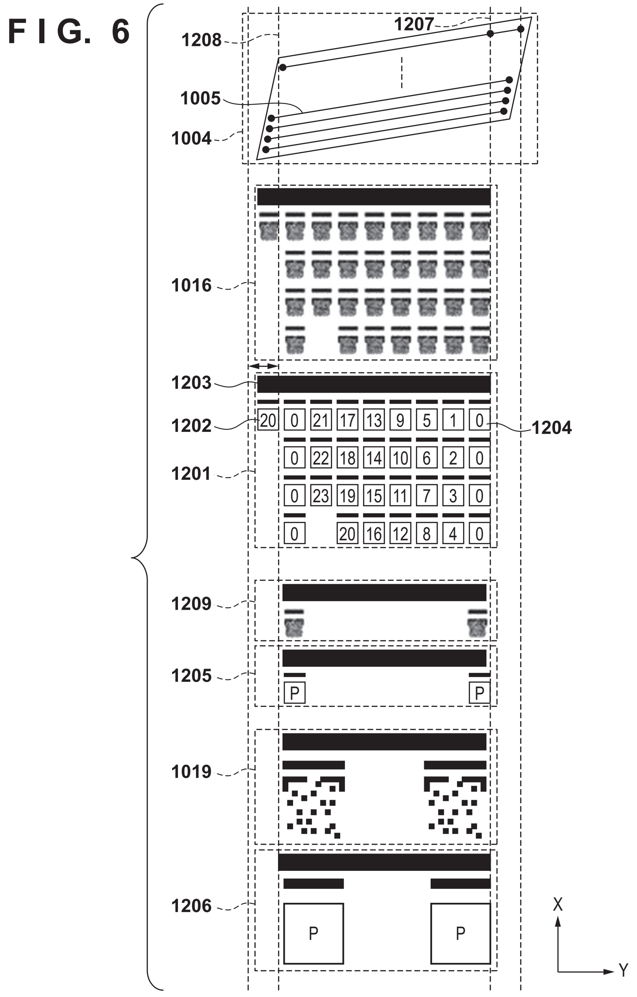

FIG. 6 is a diagram showing a relationship between the patterns 1016 and 1019 corresponding to a recording chip 1004, and ejection nozzles. Note that the other recording chips 1004 constituting each recording head 522 have the same configuration as that of the recording chip 1004 shown in FIG. 6.

One recording chip 1004 includes a plurality of nozzle arrays 1005. One nozzle array 1005 includes a plurality of nozzles. One recording chip 1004 includes 24 nozzle arrays 1005 disposed thereon. The test patterns corresponding to the recording chip 1004 are recorded by each of the nozzle arrays 1005 of the recording chip 1004 using the nozzles in the range from an edge 1207 to an edge 1208. The range from the edge 1207 to the edge 1208 may be changed according to the configuration of the recording chip 1004.

The pattern matching patterns included in the pattern 1016 are provided so as to respectively correspond to the plurality of nozzle arrays 1005. Here, each of the pattern matching patterns is recorded using the nozzle array 1005 to which the corresponding number is assigned. That is, pattern matching patterns 0 to 23 are provided for the 24 nozzle arrays 1005.

Based on pattern matching pattern denoted by "0" (i.e., the nozzle arrays to which "0" is assigned) in the nozzle pattern arrangement in a layout 1201 as references, the positional displacement is calculated from relative positions of the pattern matching patterns and the remaining nozzles. As an exception, a pattern matching pattern 1202 is provided. The pattern matching pattern 1202 is a pattern matching pattern to be recorded by a nozzle array 1005 to which "20" is assigned, among the nozzle arrays 1005 of the left neighboring recording chip 1004. Note that the nozzle array 1005 of the left neighboring recording chip 1004 is not limited to the nozzle array 1005 to which "20" is assigned. The number assigned to the nozzle array 1005 of the left neighboring recording chip 1004 may be changed according to the number of nozzle arrays 1005 of the recording chip 1004, and the shape or the like of the recording chip 1004.

The pattern matching pattern 1202 is not a pattern recorded by a target recording chip 1004, and will therefore not be used for calculating positional displacement of the nozzle arrays 1005 of the target recording chip 1004. One pattern 1016 is recorded for one recording chip 1004. Based on one of the pattern matching patterns for one nozzle array of the recording chip 1004, the positional displacement of the recording chip 1004 due to a manufacturing error, and the tilt of the recording head 522 are calculated. The inter-chip deviation of the recording chip 1004 and the tilt of the recording head 522 are calculated using, as a reference chip, the recording chip 1004 corresponding to the second pattern 1016 from the pattern located at the left end or right end that is recorded on the recording medium 1001.

Note that the size of the recording medium 1001 is variable in the present embodiment. Accordingly, the pattern 1016 may in some cases be recorded to be missing at the left or right end of the recording medium 1001. When such a pattern 1016 with omission is recorded with a length greater than or equal to the length of a detection mark 1203, the pattern at the right end is selected as a pattern for calculating a pattern matching pattern 1204, and the pattern at the left end is selected as a pattern for calculating the pattern matching pattern 1202.

Depending on the feature of the recording head 522, the test pattern for one recording chip 1004 may be a pattern 1209, instead of the pattern 1016. In this case, each of the pattern matching patterns 1022 corresponds to a nozzle array in a layout 1205. Reference character "P" in the layout 1205 means that the pattern matching pattern 1022 is recorded with a plurality of nozzle arrays 1005. Then, the pattern matching pattern 1022 is used to calculate the tilt of the recording head 522.

Each of the pattern matching patterns 1023 for the patterns 1019 for one recording chip 1004 corresponds to a nozzle array 1005 in the layout 1206. Reference character "P" in the layout 1206 means that the pattern matching pattern 1023 is recorded with a plurality of nozzle arrays 1005. Also, the pattern matching pattern 1023 is used to calculate the tilt of the recording head 522.

The patterns 1016 and 1019 for one recording chip 1004 are recorded by shifting the timing of recording onto the recording medium 1001 by an amount taking into account a manufacturing error of the nozzle arrays 1005 and a manufacturing error of the recording chip 1004. This prevents the test patterns from overlapping each other due to these errors.

FIG. 7 is a diagram illustrating a method for calculating an inter-color deviation amount according to the first embodiment. FIG. 7 shows the correspondence between the test pattern for performing calculation for correcting the inter-color deviation between the recording heads 522, and a recording chip 1004.

A test pattern 1301 is a test pattern for calculating a positional error between the recording heads 522. As shown in a layout 1302, the test pattern 1301 is recorded with the recording heads 522 of the various printing colors. In each of the recording heads 522, one recording chip 1004 to be used for pattern recording is selected. In FIG. 7, it is assumed that a recording chip 1303 is selected.

The recording chip 1303 is used to record the test pattern 1301 on the recording medium 1001. The black portions in the test pattern 1301 are patterns recorded with the printing colors (inks). On the other hand, the white portions are blank (base) portions of the recording medium 1001. The hatched region is a region filled with the K ink that covers a pattern region T described below.

The pattern matching pattern 1022 is used for the K, C, M, and Y inks. The pattern matching pattern 1023 is used for the reaction liquid. Note that the reaction liquid is denoted by "T". In the layout 1302, the patterns are recorded using the recording head for the K ink as a reference head, and the positional displacement of each of the recording heads 522 is calculated.

The patterns for the reference head are patterns similar to the pattern matching patterns for the printing colors for which positional displacement is to be calculated, and are inverted patterns K whose perimeter is filled. The pattern matching patterns corresponding to the printing colors are not limited to those shown in FIGS. 5 and 7, and may be other patterns.

The test pattern 1301 is used for calculating inter-color deviation between the recording heads 522. The test pattern 1301 is recorded by shifting the timing of recording onto the recording medium 1001 by an amount greater than the maximum inter-color deviation amount between the recording heads 522. In this manner, shifting the timing of recording of the recording heads 522 prevents the test patterns from overlapping each other.

### Calculation of Deviation Amount Between Nozzle Arrays

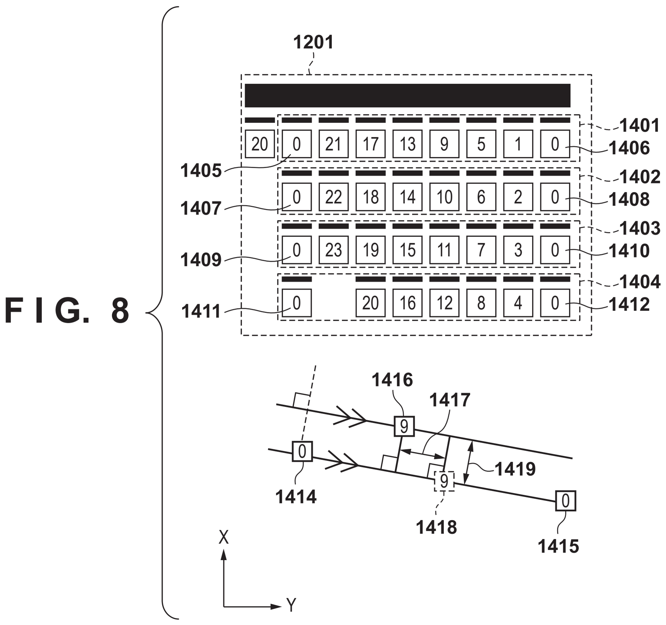

FIG. 8 is a diagram illustrating a method for calculating a deviation amount between nozzle arrays according to the first embodiment.

As described above, one recording chip 1004 includes 24 nozzle arrays 1005 disposed thereon. Here, the first nozzle array counting from the downstream side in the conveyance direction (X direction) is referred to as a nozzle array 0, and the last nozzle array is referred to as a nozzle array 23.

A method for calculating a deviation amount between the nozzle arrays will be described using a read image of patterns recorded in accordance with the layout 1201. The numerical value in each rectangular region in the layout 1201 indicates the number assigned to the nozzle array used for recording the pattern matching patterns. For example, an array-0 pattern 1405 indicates a pattern recorded with the nozzle array 0. Hereinafter, a recorded pattern recorded with a nozzle array x is referred to as an "array-x pattern".

The layout 1201 includes four regions 1401 to 1404. In the region 1401, array-0 patterns 1405 and 1406 are used as references. Similarly, in the region 1402, array-0 patterns 1407 and 1408 are used as references. In the region 1403, array-0 patterns 1409 and 1410 are used as references. In the region 1404, array-0 patterns 1411 and 1412 are used as references. In each of the regions 1401 to 1404, the amount of positional displacement between the two array-0 patterns (references) and the recorded patterns recorded using the other nozzle arrays is calculated.

As an example, a method for calculating a positional displacement amount between the recorded patterns using the nozzle array 0 and the nozzle array 9 will be described.

A recorded pattern 1414 corresponds to the array-0 pattern 1405 in the region 1401. A recorded pattern 1415 corresponds to the array-0 pattern 1406 in the region 1401. The recorded patterns 1414 and 1415 are reference patterns for calculating a positional displacement amount.

A recorded pattern 1416 is an array-9 pattern recorded in the region 1401. If patterns are respectively recorded by the nozzle array 0 and the nozzle array 9, and there is no deviation between the landing positions of the two ejected inks, the array-9 pattern is recorded on a straight line connecting the recorded patterns 1414 and 1415. A recorded pattern 1418 indicates the position of an array-9 pattern recorded at an ideal position where there is no deviation between the landing positions of the inks. On the other hand, a recorded pattern 1416 indicates the actual recording position, which is displaced from the ideal position, of the array-9 pattern.

The deviation amount between the recorded patterns 1416 and 1418 is the amount of positional displacement of the nozzle array 9 from the nozzle array 0. Assume that a deviation amount 1417 is a component of this positional displacement in the nozzle array direction (Y direction), and a deviation amount 1419 is a component thereof in the conveyance direction (X direction). The deviation amount 1419 is the length of a perpendicular drawn from the recorded pattern 1416 to the straight line connecting the recorded patterns 1414 and 1415. Accordingly, the deviation amount 1419 can be calculated based on the positions of the recorded patterns 1414, 1415, and 1416. Similarly, the deviation amount 1417 can be calculated based on the positions of the recorded patterns 1414, 1415, and 1416.

As described above, it is possible to calculate the amounts of positional displacements of the array-1 to array-23 patterns using the array-0 patterns as references. It is possible to calculate the amounts of positional displacement of the nozzle arrays 1 to 23 from the nozzle array 0.

### Calculation of Deviation Amount Between Recording Chips, and Calculation of Tilt Amount of Recording Head

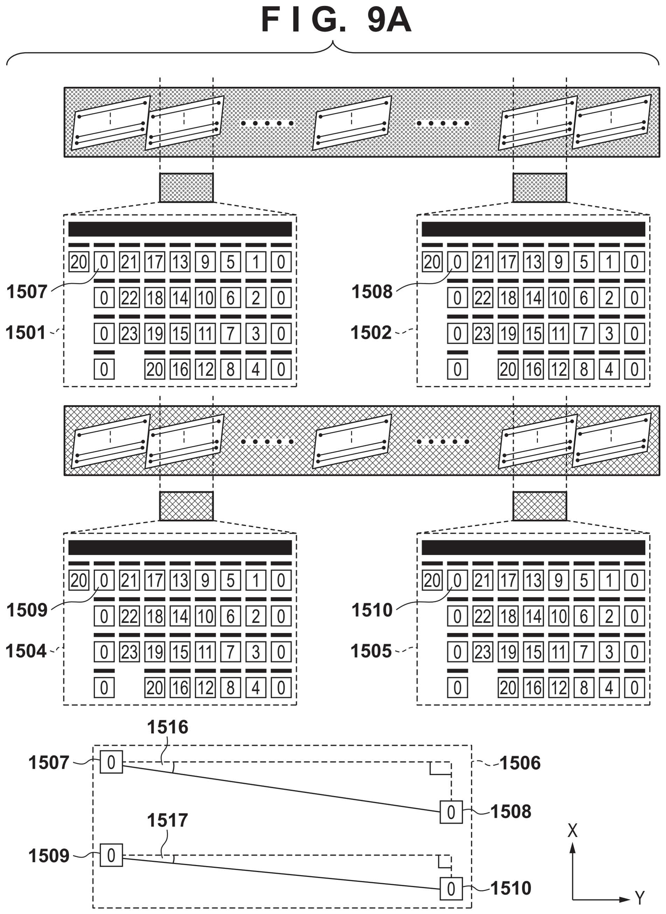

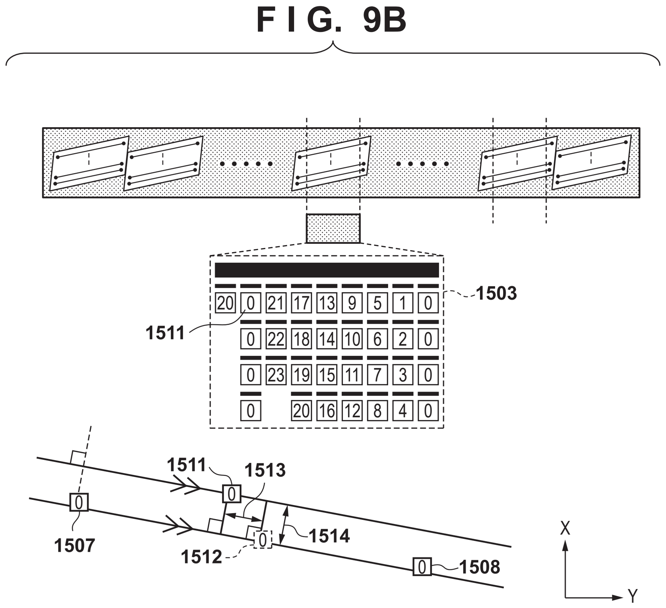

FIGS. 9A and 9B is a diagram illustrating a method for calculating an inter-chip deviation amount and a tilt amount of a recording head according to the first embodiment. In FIGS. 9A and 9B, the deviation amount between the recording chips 1004, and the tilt amount of the recording head 522 are calculated.

One recording head 522 includes 17 recording chips 1004 disposed thereon. The first recording chip counting from the far side of the recording apparatus 501 is referred to as a recording chip 50, and the recording chip located on the near side of the recording apparatus 501 is referred to as a recording chip 66. In this manner, a unique number is given to each of the recording chips 1004. Note that the right side of FIGS. 9A and 9B corresponds to the far side of the recording apparatus 501. The left side of FIGS. 9A and 9B corresponds to the near side of the recording apparatus 501. A method for calculating an inter-chip deviation amount will be described with reference to FIGS. 9A and 9B.

Recorded patterns 1501 to 1503 are each a recorded pattern recorded using three of the recording chips 1004 of a recording head 522, in accordance with the layout 1201 shown in FIG. 6. Depending on the size of the recording medium 1001 and a conveyance error, there may be recording chips 1004 that do not perform recording on the recording medium 1001. Hereinafter, a pattern recorded on the recording medium 1001 using a recording chip x is referred to as a "chip-x pattern".

The recorded pattern 1501 is a pattern recorded with the recording chip 1004 located immediately rightward of the leftmost recording chip 1004, among the patterns recorded on the recording medium 1001. The numbering of the recording chips used for recording the recorded pattern 1501 varies depending on the size or the like of the recording medium 1001. The recorded pattern 1501 is referred to as a "chip-65 pattern".

The recorded pattern 1502 is a pattern recorded with the recording chip 1004 located immediately leftward of the rightmost recording chip 1004, among the patterns recorded on the recording medium 1001. The recorded pattern 1502 is referred to as a "chip-51 pattern".

The recorded pattern 1503 indicates a layout of patterns corresponding to a target recording chip 1004 for which the amount of inter-chip deviation is to be calculated. The following description will be given taking a recording chip 58 as the target, for example. The recording chip 58 is a recording chip located at the center of the recording chip array of the recording head 522.

A recorded pattern 1507 is a pattern recorded using the nozzle array 0 of a recording chip 65 in the recorded pattern 1501.

A recorded pattern 1508 is a pattern recorded using the nozzle array 0 of a recording chip 51 in the recorded pattern 1502.

The recording chip 65 and the recording chip 51 are reference chips for calculating inter-chip position displacement. A recorded pattern 1511 is a pattern recorded using the nozzle array 0 of the recording chip 58. The recording chip 58 is a target chip for which inter-chip deviation is to be calculated.

**If** there is no deviation between ink landing positions when the recorded patterns are recorded with the respective nozzle arrays 0 of the recording chips 51, 58, and 65, a chip-58 pattern is recorded with recording chip 58 on a straight line connecting the recorded patterns 1507 and 1508. A recorded pattern 1512 indicates the position of a chip-58 pattern recorded at an ideal position where there is no deviation between ink landing positions. On the other hand, a recorded pattern 1511 indicates the actual recording position, which is displaced from the ideal position, of the chip-58 pattern. A relative positional displacement occurs between the straight line connecting the recording chips 51 and 65, and the recording chip 58. The deviation amount between the recorded patterns 1511 and 1512 is a deviation amount 1514.

The deviation amount 1514 is the length of a perpendicular drawn from the recorded pattern 1511 to the straight line connecting the recorded patterns 1507 and 1508. Accordingly, the deviation amount 1514 can be calculated based on the positions of the recorded patterns 1507, 1508, and 1511.

In addition, a deviation amount 1513 can be calculated by calculating the distance between a line passing through the recorded pattern 1511 and a line passing through the recorded pattern 1512, both of which lines are orthogonal to the straight line connecting the recorded pattern 1507 and the recorded pattern 1508. Accordingly, the deviation amounts 1513 and 1514 can be used for recording position correction.

As described above, the two recording chips 1004 at the left and right ends are used as reference chips, and the deviation amounts of the other recording chips 1004 in the X direction and the Y direction can be calculated using the straight line (reference line) connecting the reference chips. Note, however, that a different deviation amount calculation method is used for recording chips 1004 located further toward the left end and the right end relative to the two reference chips, respectively.

In FIG. 9B, the reference line is formed by the recording chip 65 and the recording chip 51. The recording chip 65 is the recording chip at the left end of the reference line. The recording chip 51 is the recording chip at the right end of the reference line. Accordingly, a recording chip 66 is the recorded pattern 1511 to be adjusted on the left end side, and a recording chip 50 is the recorded pattern 1511 to be adjusted on the right end side.

For the recording chip 66 at the left end, the deviation amount is calculated using the pattern matching patterns 1204 in the layout 1201, as in the cases of the other recording chips.

For the recording chip 50 at the right end, the pattern matching pattern 1202 formed with the left neighboring recording chip is used, instead of the pattern matching pattern 1204. The reason for this is that the recording chip at the end may be able to record the layout 1201 only up to halfway through the length on the recording medium 1001.

Depending on the length of the recording medium 1001, there may be recording chips located outward of the recording chip at the left end and the recording chip at the right end within a range in which recording is performed. Since these recording chips cannot perform recording on the recording medium 1001, it is not possible to detect the patterns. Accordingly, for the recording chip located outward of the left end side, a deviation amount of the recording chip located immediately rightward thereof is used as a correction value. Similarly, for the recording chip located outward of the right end side, a deviation amount of the recording chip located immediately leftward thereof is used as a correction value.

A method for calculating a tilt amount of the recording head 522 based on a read image of patterns recorded in accordance with the layout 1201 will be described with reference to FIGS. 9A and 9B.

The calculation of the tilt amount of the recording head 522 uses patterns similar to those used for calculating a deviation amount between the recording chips 1004. Here, the tilt amount of the recording head 522 refers to a relative tilt amount from the reference head. Also, the tilt amount of each of the recording heads 522 other than the reference head is calculated.

Reference 1506 indicates a diagram for illustrating a method for calculating a tilt amount of the recording head 522.

First, the tilt amount of the reference head is calculated. As described above, the recorded patterns 1507 and 1508 are recorded patterns formed by the reference chips located at the left and right ends. An angle 1516 represents an angle formed by the straight line connecting the recorded patterns 1507 and 1508, and an ideal line obtained when there is no ink landing position deviation caused by the tilt of the recording head 522. That is, the angle 1516 represents the tilt amount of the reference head.

Next, the tilt amount of the recording head 522 to be corrected is calculated. In the recording head 522 to be corrected, recorded patterns 1509 and 1510 are recorded patterns formed by the reference chips located at the left and right ends as described previously. An angle 1517 is an angle formed by a straight line connecting the recorded patterns 1509 and 1510, and an ideal line obtained when there is no ink landing position deviation caused by the tilt of the recording head 522. That is, the angle 1517 represents the tilt amount of the recording head 522 to be corrected.

Finally, the tilt amount of the recording head 522 to be corrected is calculated. The tilt amount of the recording head 522 to be corrected can be calculated by (Equation 1) below. Assume that the tilt amount of the recording head 522 is represented by an angle.$Tilt amount of recording head to be corrected = Angle 1517 - Angle 1516$

Note that, among the plurality of recording heads 522, the recording head 522 for recording K is set as a reference head. By using the above-described method, it is possible to calculate the tilt amount of each of the recording heads 522 other than the reference head (recording head 522 of K).

### Calculation of Deviation Amount Between Recording Heads

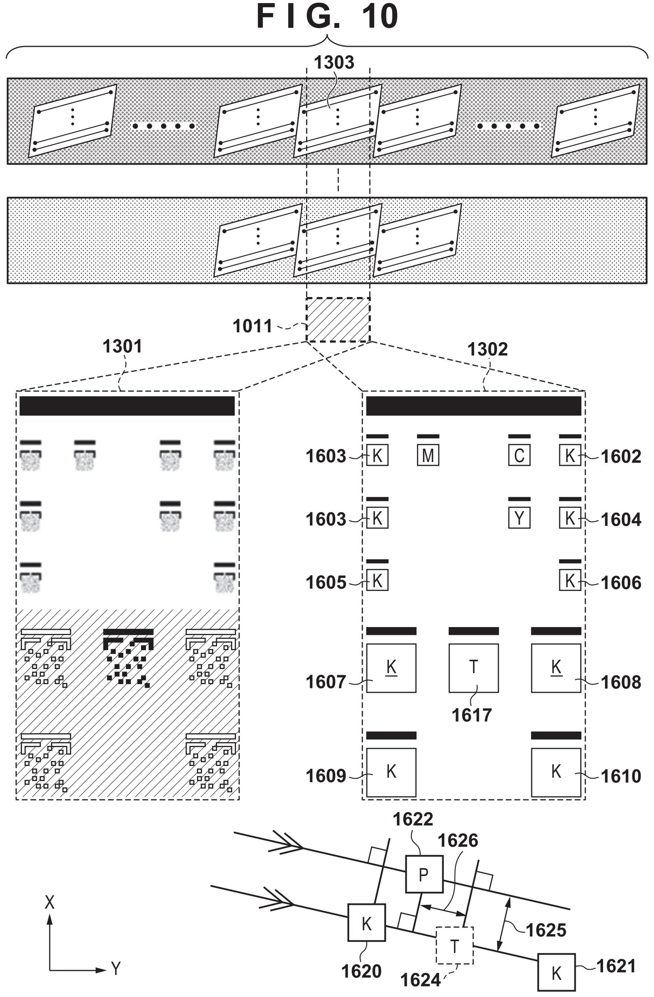

FIG. 10 is a diagram illustrating a method for calculating a deviation amount between the recording heads according to the first embodiment.

The first recording head 522 counting from the downstream side in the conveyance direction (X direction) is referred to as a recording head K of the ink color K. Following the recording head K, a recording head C, a recording head M, and a recording head Y are disposed in this order. In addition, a recording head of T (reaction liquid) is referred to as a recording head T. A method for calculating a deviation amount between the recording heads 522 using a read image of the test pattern 1301 recorded in accordance with the layout 1302 will be described. Hereinafter, a deviation amount between the recording heads 522 is referred to as an "inter-color deviation amount".

The test pattern 1301 is a test pattern for calculating an inter-color deviation amount. In the present specification, the test pattern 1301 includes at least a recording patch in which a color ink and the reaction liquid are recorded so as to overlap each other, and a region in which the color ink is recorded around the recording patch. The test pattern 1301 is recorded using the recording chip 1303 at a predetermined position in the recording head 522 corresponding to the colors in the layout 1302. Here, the recording chip 1303 at the predetermined position is the recording chip 58.

Recorded patterns 1601 to 1610 are patterns recorded by the reference head (recording head K). Each of the recorded patterns of the colors other than K is a pattern for which the positional displacement amount between the recording heads 522 is to be calculated.

The recorded patterns of the colors other than K are patterns of C, M, Y, and T (reaction liquid). However, the number of printing colors may be increased or decreased. In FIG. 10, regions in which recorded patterns recorded by the other recording heads are recorded are secured. The recorded patterns of C, M, and Y are recorded using the pattern matching pattern 1022 shown in FIG. 5. Also, reference patterns (recorded patterns 1601 to 1606 of K) corresponding to the recorded patterns of C, M, and Y are recorded using the pattern matching pattern 1022.

On the other hand, a recorded pattern 1617 with the reaction liquid is recorded using the pattern matching pattern 1023 shown in FIG. 5. In the present specification, the recorded pattern 1617 is a "recording patch". The recorded pattern 1617 (recording patch) refers to a recording patch in which a color ink (e.g., the K ink) and the reaction liquid are recorded so as to overlap each other in the test pattern 1301. The recorded pattern 1617 (recording patch) is disposed between the recorded pattern 1607 (reference recording patch) on the left side of the test pattern 1301, and the recorded pattern 1608 (reference recording patch) on the right side of the test pattern 1301. Note that a "recording patch" refers to a pattern to be used for pattern analysis such as template matching, as described in the beginning of the present specification. Accordingly, each of the reference patterns (recorded patterns 1607 to 1610 of K) corresponding to the recorded pattern 1617 is recorded using the inverted pattern K, which is an outlined version of the pattern matching pattern 1023, as described in connection with FIG. 7. In the present specification, the hatched region in the test pattern 1301 refers to a region in which a color ink (here, the K ink) is recorded around the recording patch. For the reference head and the recording head 522 for which the inter-color deviation is to be calculated, pattern matching patterns having the same size are used.

The method for calculating the inter-color deviation amount between the reference head (recording head K) and the other recording heads can be equally applied to the recording heads. Here, as an example, a method for calculating an inter-color deviation amount between the recording head K and the recording head T will be described.

A recorded pattern 1620 corresponds to the recorded pattern 1607. A recorded pattern 1621 corresponds to the recorded pattern 1608. The recorded patterns 1620 and 1621 are patterns recorded with the chip 58 of the recording head K (reference head).

A recorded pattern 1622 corresponds to the recorded pattern 1617. The recorded pattern 1622 is a recorded pattern recorded with the chip 58 of the recording head T (recording head for which the deviation amount is to be calculated).

If the recorded pattern is recorded by the recording head K and the recording head T, and there is no landing position deviation of the ejected ink, the recorded pattern of the recording head T is recorded on a straight line connecting the recorded patterns 1620 and 1621. A recorded pattern 1624 is a recorded pattern of the recording head T recorded at an ideal position where there is no landing position deviation of the ejected ink. On the other hand, the recorded pattern 1622 is a recorded pattern of the recording head T when there is an actual landing position deviation of the ink.

A deviation between the recorded pattern 1622 and 1624 in a read image indicates that the recording head T is relatively deviated from the recording head K. A deviation amount between the recorded patterns 1622 and 1624 is referred to as a deviation amount 1625. The deviation amount 1625 is the length of a perpendicular drawn from the recorded pattern 1622 to the straight line connecting the recorded patterns 1620 and 1621. Accordingly, the deviation amount 1625 is calculated based on the positions of the recorded patterns 1620, 1621, and 1622.

The distance between a line passing through the recorded pattern 1622 and a line passing through the recorded pattern 1624, both of which lines are orthogonal to the straight line connecting recorded patterns 1620 and 1621 (hereinafter, straight line), is calculated. This makes it possible to calculate a deviation amount 1626 between the recorded patterns 1624 and 1622.

In this manner, the head position displacement amount (inter-color deviation amount) includes the deviation amounts 1625 and 1626.

By using the above-described method, it is possible to calculate an inter-color deviation amount between the reference head (recording head K) and the recording heads other than the recording head K.

### Mark Detection Processing

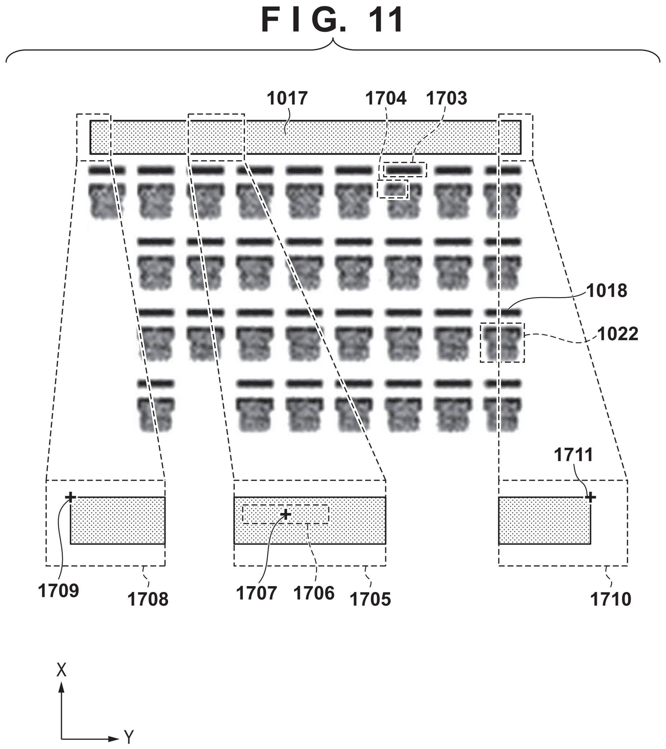

FIG. 11 is a diagram illustrating processing for detecting a detection mark, an alignment mark, and a pattern matching pattern according to the first embodiment.

Processing for detecting a detection mark of each pattern corresponding to the recording chip 1004 from a read image of a test pattern for calculating a deviation amount will be described. FIG. 11 shows a pattern corresponding to each recording chip, as shown in the pattern 1016 in FIG. 6. As the patterns corresponding to the recording chip 1004, there are three types of patterns, namely, the pattern 1016, the pattern 1019, and the pattern 1209 in FIG. 6. Note that the detection processing is performed in the same manner as described in connection with FIG. 6. The detection processing is also performed in the same manner for the test pattern 1301 shown in FIG. 7, which is used for calculating a positional error between the recording heads 522. The mark detection processing will be described using, as an example the pattern 1016 in FIG. 6 with reference to FIG. 11.

The mark detection processing includes three steps (first step, second step, third step).

In the first step, the detection mark 1017 (see FIG. 11) is detected. The position of a test pattern for one recording chip 1004 is estimated based on a detection position of the detection mark 1017.

In the second step, an alignment mark 1703 is detected based on the estimated position of the test pattern estimated in the first step. Since the pattern 1016 shown in FIG. 6 is used as an example, the alignment mark 1703 is a mark similar to the alignment mark 1018. The alignment mark 1703 is recorded near each pattern matching pattern. Accordingly, the position of the pattern matching pattern is estimated based on the detection position of the alignment mark 1703.

In the third step, the pattern position is detected using pattern matching, based on the estimated position of the pattern matching pattern estimated in the second step. Since the pattern 1016 shown in FIG. 6 is used as an example, a region 1704 corresponds to the pattern matching pattern 1022.

The processing for detecting the detection mark 1017 in the first step will be described. This processing uses the luminance value of a channel in which the density is highest in the printing color of the recording head corresponding to the pattern to be detected, among three R, G, and B channels of a read image (also referred to as a scan image) that can be read by the scanner unit 511. For example, the R channel is used when the color with the highest density is cyan (C). The G channel is used when the color with the highest density is magenta (M). The B channel is used when the color with the highest density is yellow (Y). Note that one of the R, G, and B channels is used when there is a printing color (black (K)) whose density is high in all the channels.

An indication 1705 is an enlarged view of a part of the detection mark 1017. The detection mark 1017 is detected based on the average density of a predetermined region of a read image. A detection mark detection region 1706 is a region in which the average density is obtained. If the average density in the detection mark detection region 1706 is greater than or equal to a predetermined density, the detection mark detection region 1706 is specified as a detection mark region. Then, the central position of the specified detection mark region is set as a detection mark detection position 1707. Note that the range and the threshold (predetermined density) of the detection mark detection region 1706 may be freely changed.

Next, the upper left end position and the upper right end position of the detection mark 1017 are detected. An indication 1708 is an enlarged view of the periphery of the upper left end of the detection mark 1017. An indication 1710 is an enlarged view of the periphery of the upper right end of the detection mark 1017. A region with a density greater than or equal to the predetermined density is scanned from the detection mark detection position 1707, and the upper left end of the region with the density greater than or equal to the predetermined density is set as a detection mark upper left end position 1709. Scanning is performed in the same manner, and the upper right end of a region with a density greater than or equal to the predetermined density is set as a detection mark upper right end position 1711. The center of gravity of the density of a predetermined region is calculated from the position determined based on the detection mark upper left end position 1709 as a starting point. Thus, the detection range of the alignment mark 1703 is estimated.

By detecting the detection mark 1017 of the pattern 1016 shown in FIG. 4, it is possible to estimate the detection range of the alignment mark 1703. The detection processing for the alignment mark 1703 is the same as the detection processing for the detection mark 1017. That is, a region with a density greater than or equal to the predetermined density is scanned, and the center of gravity of the density for that region is calculated. Thus, the position of the alignment mark 1703 is detected.

Next, the position of the pattern matching pattern is estimated. The region 1704 is a region indicating the upper left end position of the pattern matching pattern. In addition, the detection result of the detection mark 1017 is used for determining which recording chip of which recording head this pattern corresponds to as a test pattern. After the position of the pattern matching pattern has been roughly determined through the above-described processing, the final position of the pattern matching pattern on the image is detected by performing position detection processing including pattern matching processing. The position of the pattern matching pattern on the image is the position for calculating the distance used to calculate various deviation amounts in head position displacement correction. Here, the various deviation amounts correspond to a manufacturing error between the nozzle arrays, a manufacturing error between the chips, a tilt of the recording head, and positional displacement between the recording heads.

### Overall Flow of Recording Position Adjustment

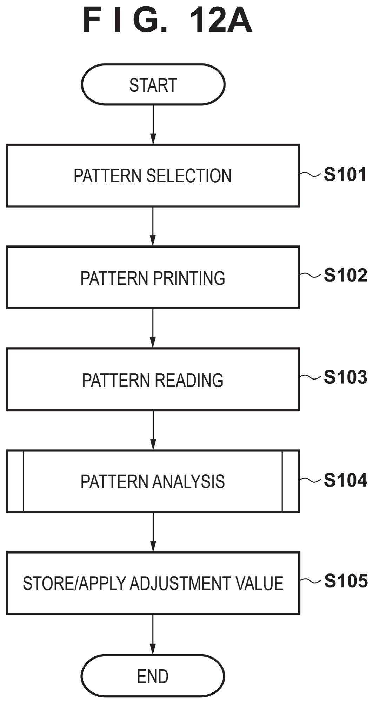

FIG. 12A shows an overall flowchart for illustrating processing for adjusting the recording position of the reaction liquid according to the first embodiment. Note that the processing illustrated in FIG. 12A may be performed by the CPU of the control unit 531 of the recording apparatus 501 loading a program stored in a ROM onto a RAM and executing the program.

The recording position adjustment may be performed at any timing (e.g., when changing the type of the recording medium) selected by the user. As described previously, pattern printing and pattern reading are performed, and thereafter pattern analysis is performed. Although the recording position is calculated using pattern matching, the analysis method is not limited to pattern matching. The analysis method may be, for example, a method in which a recording patch other than a pattern matching pattern is recorded, and the recording position is calculated by detecting an edge of the recording patch.

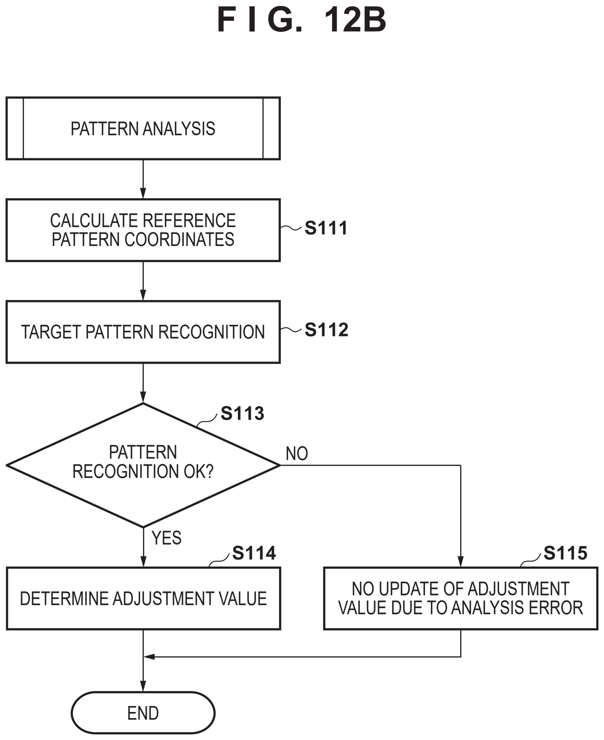

FIG. 12B is a flowchart for illustrating pattern analysis processing in S104 illustrated in FIG. 12A. The pattern analysis processing is performed by the control unit 531 of the recording apparatus 501. However, the present disclosure is not limited thereto. For example, the pattern analysis processing may be performed by the scanner unit 511 and/or the CPU of the host apparatus 533 loading a program stored in a ROM onto a RAM and executing the program.

The description now returns to FIG. 12A. In the present specification, the control unit 531 has the functions of at least a "control unit", a "detection unit", and a "determination unit". Note that the control unit 531 also has the function of controlling the recording unit 507 (recording unit).

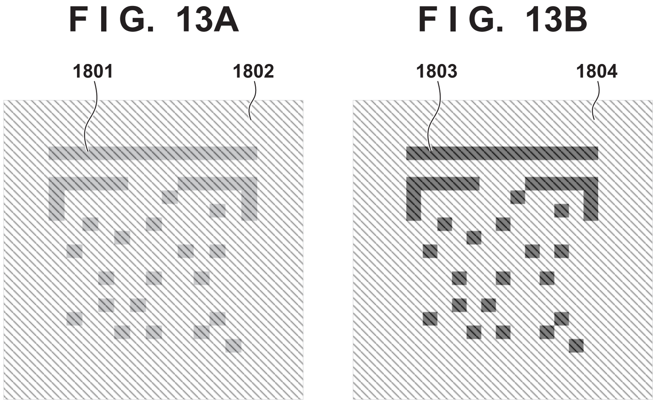

In S101, based on the type of the recording medium, the control unit 531 selects a test pattern to be used for recording position adjustment for the reaction liquid. The selection method of the test pattern will be described later with reference to FIGS. 13A and 13B.

In S102, the control unit 531 uses the recording unit 507 (recording unit) to print (record) the test pattern 1002 on the recording medium 1001 (sheet 581).

In S103, the control unit 531 uses the scanner unit 511 to obtain a detection mark, an alignment mark, and a pattern matching pattern from the test pattern 1002 in a read image.

In S104, the control unit 531 performs pattern analysis. The pattern analysis processing will be described later with reference to FIG. 12B.

In S105, the control unit 531 updates the original adjustment value with an adjustment value for adjusting the recording position of the reaction liquid determined based on the result of the pattern analysis.

Here, the pattern analysis processing in S104 will be described with reference to FIG. 12B.

The control unit 531 detects a pattern corresponding to the target recording chip 1004, based on the detection marks 1017 and 1020 detected from the test pattern 1002 shown in FIG. 4.

In S111, the control unit 531 calculates the positions (e.g., coordinates) of the reference patterns 1607 and 1608 shown in FIG. 10. In the present specification, the positions of the reference patterns 1607 and 1608 are the "positions of the reference recording patches".

In S112, the control unit 531 detects the pattern 1617 (recording patch) of the reaction liquid shown in FIG. 10.

In S113, the control unit 531 determines whether or not the pattern 1617 (recording patch) has been successfully detected. If the pattern 1617 (recording patch) has been successfully detected (YES in S113), the control unit 531 advances the processing to S114. On the other hand, if the pattern 1617 (recording patch) has not been successfully detected (NO in S113), the control unit 531 advances the processing to S115.

In S114, the control unit 531 calculates a deviation amount and an adjustment value of the recording position of the reaction liquid, based on coordinate analysis between patterns. Here, "coordinate analysis between patterns" refers to analyzing a relationship between the positions of the reference recording patches (reference patterns 1607 and 1608), and the position of the recording patch (pattern 1617) (see FIG. 10).

In S115, the control unit 531 ends the pattern analysis processing without updating the adjustment value for the recording position of the reaction liquid.

### (Selection of Test Pattern, and Application amount of Reaction Liquid Per Unit Area)

In S101 shown in FIG. 12A, before performing the recording position adjustment for the reaction liquid, the user is prompted to select information regarding the recording medium to be used for the recording position adjustment. Here, information regarding the recording medium presented to the user includes at least one of, for example, "absorbent recording medium/non-absorbent recording medium", "high-quality paper/art paper/film or the like (i.e., an indication that allows the permeation property of the recording medium to be roughly determined)", and a "specific numerical value representing the permeation property of the recording medium".

In S101, the control unit 531 selects the test pattern corresponding to the recording medium selected by the user, based on the information regarding the recording medium selected by the user. For example, a plurality of types of test patterns are stored in advance in the storage device of the control unit 531 of the recording apparatus 501.

The present embodiment selectively uses two types of test patterns according to the information regarding the recording medium 1001. The two types of test patterns include the pattern 1015 (FIG. 4) and the pattern 1301 (FIG. 7). The pattern 1015 (FIG. 4) and the pattern 1301 (FIG. 7) differ from each other in the application amount of the reaction liquid per unit area required to form the pattern matching pattern of the reaction liquid.

FIGS. 13A and 13B are diagrams illustrating patterns for calculating a deviation amount between the recording heads of the reaction liquid according to the first embodiment. FIGS. 13A and 13B are diagrams showing the application amounts of the pattern matching patterns of the reaction liquid in two types of test patterns.

FIG. 13A shows a pattern matching pattern (referred to as a test pattern A) in which the application amount of the reaction liquid is small. On the other hand, FIG. 13B shows a pattern matching pattern (referred to as a test pattern B) in which the application amount of the reaction liquid is large. The black portions in FIGS. 13A and 13B are the portions in which the reaction liquid is recorded. The hatched regions are the regions filled with the K ink.

An indication 1801 visually represents the application amount of the reaction liquid per unit area in the test pattern A. An indication 1802 visually represents the application amount of the K ink per unit area in the test pattern A. An indication 1803 visually represents the application amount of the reaction liquid per unit area in the test pattern B. An indication 1804 visually represents the application amount of the K ink per unit area in the test pattern B.

The application amount of the reaction liquid per unit area in the indication 1801 is 4 ng/600 dots per inch (DPI). The application amount of the reaction liquid per unit area in the indication 1803 is 8 ng/600 dots per inch (DPI). The application amount of the K ink per unit area in each of the indications 1802 and 1804 is 4 ng/600 dots per inch (DPI).

Note that the numerical values of the application amounts of the reaction liquid and the K ink are not limited to those listed above, and may be freely changed. Depending on the test pattern, both the application amount of the reaction liquid and the application amount of the K ink may be changed. The test patterns are not limited to the test patterns A and B, and three or more types of test patterns may be used.

### Relationship Between Test Pattern, Recording medium, and Application Amount of Reaction Liquid

· Test pattern A (FIG. 13A): non-absorbent recording medium, application amount of reaction liquid 4 ng/600 DPI, application amount of K ink 4 ng/600 DPI
· Test pattern B (FIG. 13B): absorbent recording medium, application amount of reaction liquid 8 ng/600 DPI, application amount of K ink 4 ng/600 DPI

In the present embodiment, the test pattern A (FIG. 13A) is used for a non-absorbent recording medium that does not allow the reaction liquid to permeate into it. On the other hand, the test pattern B (FIG. 13B) is used for an absorbent recording medium that allows the reaction liquid to permeate into it. In accordance with the type of the recording medium selected by the user, the control unit 531 determines which of the absorbent recording medium and the non-absorbent recording medium is the recording medium 1001, and selects the test pattern A or B. For example, if the test pattern A is selected (i.e., if the recording medium is a recording medium for which the permeation rate of the reaction liquid is low), the control unit 531 sets the application amount of the reaction liquid per unit area to the smallest application amount (e.g., 4 ng/600 DPI) of the reaction liquid per unit area. On the other hand, if the test pattern B is selected ( i.e., if the recording medium is a recording medium for which the permeation rate of the reaction liquid is high), the control unit 531 sets the application amount of the reaction liquid per unit area to the largest application amount (e.g., 8 ng/600 DPI) of the reaction liquid per unit area. As described thus far, the control unit 531 can set the application amount of the reaction liquid per unit area that is required for the recording unit (recording unit 507) to record the recording patch (e.g., pattern 1617) on the recording medium, according to the permeation property of the reaction liquid for the recording medium.

The higher the permeation rate of the reaction liquid for the recording medium, the smaller the amount of the reaction liquid remaining in the surface of the recording medium when the K ink is recorded. Therefore, the application amount of the reaction liquid per unit area may be larger for the recording medium for which the permeation rate of the reaction liquid is higher.

Here, the reaction liquid is used for improving image quality, for example, preventing blurring of color inks and achieving surface uniformity in the recording apparatus 501. For this purpose, the application amount of the reaction liquid per unit area to a color ink is adjusted so as to cause an appropriate level of aggregation reaction of the color ink and the reaction liquid. Excessively strong aggregation reaction may, on the contrary, result in reduced surface uniformity or reduced color development. On the other hand, test pattern printing is intended to cause excessive aggregation of a color ink and the reaction liquid, and to ensure the detection accuracy of the recording patch of the reaction liquid, using the difference in detected luminance between a region with the reaction liquid and a region without the reaction liquid.

Therefore, the application amount of the reaction liquid per unit area relative to the application amount of the color ink per unit area in the indication 1801 (test pattern A) may be larger than the application amount of the reaction liquid per unit area relative to the application amount of the color ink per unit area in a "normal image" for which the same recording medium as that used in test pattern printing is used. Similarly, the application amount of the reaction liquid per unit area relative to the application amount of the color ink per unit area in the indication 1803 (test pattern B) may be larger than the application amount of the reaction liquid per unit area relative to the application amount of the color ink per unit area in a "normal image" for which the same recording medium as that used in test pattern printing is used. Note that the above-described "normal image" refers to an actual printing pattern used for the actual printing after the recording position adjustment of the reaction liquid has been completed.

Furthermore, in the present embodiment, the application amount of the reaction liquid per unit area is switched by selecting one type of test pattern from a plurality of types of test patterns stored in the storage device of the control unit 531. However, the method for setting the application amount of the reaction liquid is not limited thereto. The control unit 531 may change the application amount of the reaction liquid, for example, by referring to one-dimensional OPGLUT stored in an OPGLUT storage, and performing different types of gamma correction processing on the ink value image data depending on the recording medium.

According to the first embodiment, it is possible to select a test pattern in which the application amount of the reaction liquid per unit area is appropriate, based on the information regarding the recording medium selected by the user. This enables the recording position of the reaction liquid to be adjusted with high accuracy, without being affected by the permeation property of the reaction liquid for the recording medium.

### Second Embodiment

In the first embodiment, the user selects information regarding the recording medium, and the test pattern A or the test pattern B in which the application amount of the reaction liquid per unit area is appropriate is selected based on the information regarding the recording medium. In the second embodiment, when the user does not have the information regarding the recording medium, a test pattern C in which a plurality of types of pattern matching patterns with different application amounts of the reaction liquid per unit area from each other are disposed is printed (recorded). Note that the second embodiment will be described in terms of differences from the first embodiment.

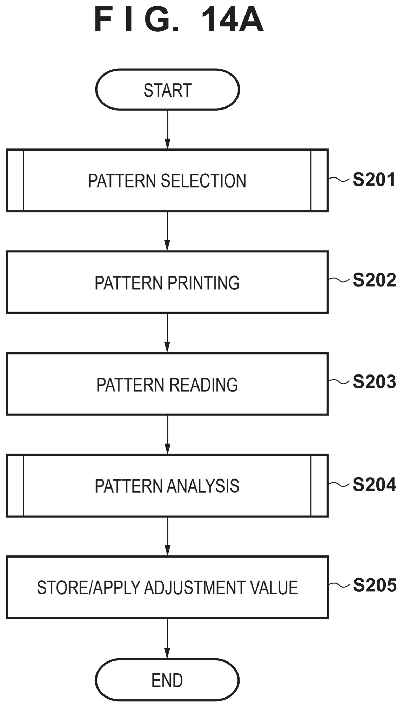

FIG. 14A shows an overall flowchart for illustrating processing for adjusting the recording position of the reaction liquid according to the second embodiment. FIG. 14A is similar to FIG. 12A of the first embodiment, and therefore a detailed description thereof has been omitted. Note that the processing illustrated in FIG. 14A can be performed by the CPU of the control unit 531 of the recording apparatus 501 loading a program stored in a ROM onto a RAM and executing the program.

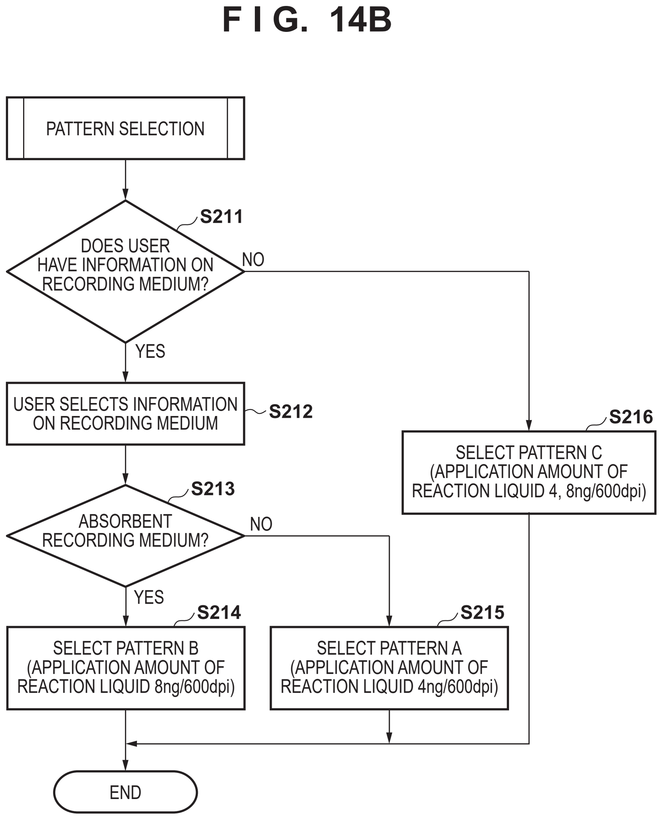

FIG. 14B shows a flowchart for illustrating pattern selection processing in S201 illustrated in FIG. 14A.

In S211, the control unit 531 determines whether or not the user has the information regarding the recording medium to be used for recording position adjustment of the reaction liquid. The information regarding the recording medium may be information regarding the permeation property of the reaction liquid for the recording medium, and includes at least one of, for example, "absorbent recording medium/non-absorbent recording medium", "high-quality paper/art paper/film or the like (i.e., an indication that allows the permeation property of the recording medium to be roughly determined)", and "a numerical value representing the permeation property of the recording medium". For example, the control unit 531 presents a message indicating "Do you have the information about the recording medium?" to the user. Then, the control unit 531 can determine whether or not the user has the information regarding the recording medium by receiving a user instruction (i.e., a user reply) to the above-described message. If an instruction indicating that the user has the information regarding the recording medium is received (YES in S211), the control unit 531 advances the processing to S212. On the other hand, if an instruction indicating that the user does not have the information regarding the recording medium is received (NO in S211), the control unit 531 advances the processing to S216.

In S212, the user selects information regarding the recording medium. The control unit 531 receives the information on the recording medium selected by the user.

In S213, the control unit 531 determines whether or not the type of the recording medium is the absorbent recording medium, based on the information regarding the recording medium selected by the user. If the type of the recording medium is the absorbent recording medium (YES in S213), the control unit 531 advances the processing to S214. On the other hand, if the type of the recording medium is not the absorbent recording medium (NO in S213), the control unit 531 advances the processing to S215.

In S214, the control unit 531 selects the test pattern B (FIG. 13B) corresponding to the absorbent recording medium.

In S215, the control unit 531 selects the test pattern A (FIG. 13B) corresponding to the non-absorbent recording medium.

In S216, since the user does not have the information regarding the recording medium, the control unit 531 selects the test pattern C. The pattern matching patterns of the reaction liquid of both the test patterns A and B are disposed in the test pattern C.

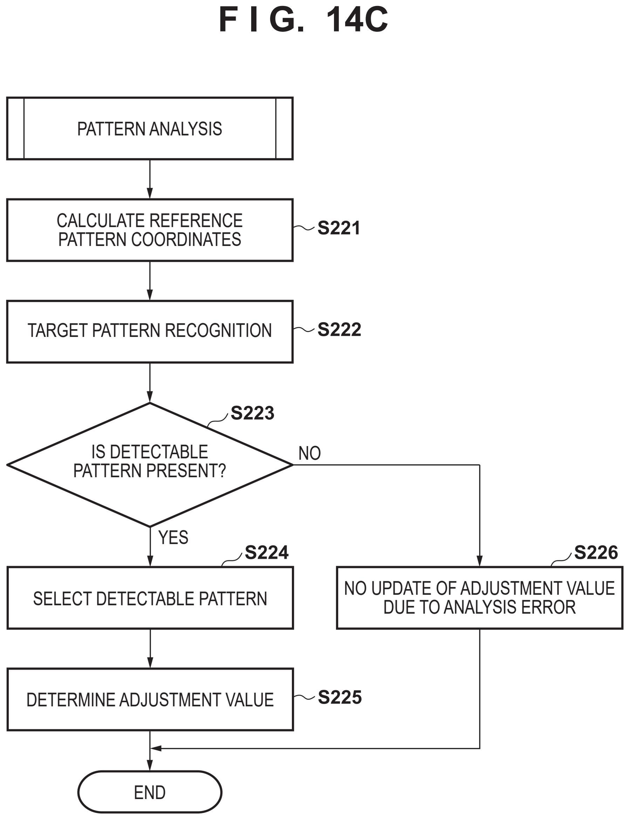

FIG. 14C shows a flowchart for illustrating pattern analysis processing in S204 illustrated in FIG. 14A.

In S221, the control unit 531 calculates the coordinates (i.e., the position of the reference recording patch) of each of the reference patterns 1607 and 1608 shown in FIG. 10.

In S222, if the test pattern C is selected in S216, the control unit 531 detects the patterns 1617 (recording patches) of the reaction liquid respectively recorded with the two different application amounts per unit area (test patterns A and B). Note that the processing performed after the test pattern A or B has been selected in S214 or S215 is the same as the processing in the first embodiment, and therefore a detailed description thereof has been omitted. Accordingly, the processing performed if the test pattern C is selected will be described below.

In S223, the control unit 531 determines whether or not there is any pattern 1617 (recording patch) that has been successfully detected. If there is any pattern 1617 (recording patch) that has been successfully detected (YES in S223), the control unit 531 advances the processing to S224. On the other hand, if there is no pattern 1617 (recording patch) that has been successfully detected (NO in S223), the control unit 531 advances the processing to S226.

In S224, the control unit 531 selects only the detected pattern 1617 from the two types of patterns 1617 with different application amounts of the reaction liquid. Note that, if the two types of patterns 1617 have been detected, the control unit 531 selects the two types of patterns 1617.

In S225, the control unit 531 calculates a deviation amount of the recording position of the reaction liquid and an adjustment value, based on coordinate analysis between patterns. Here, "coordinate analysis between patterns" refers to analyzing the relationship between the positions of the reference recording patches (reference patterns 1607 and 1608), and the position of the recording patch (pattern 1617) and/or another recording patch (pattern 1617) (see FIG. 10). Although not shown in FIG. 10, the other recording patch (pattern 1617) may be disposed below the recording patch (pattern 1617), for example. Here, when the recording patch (pattern 1617) is recorded in the test pattern A, the other recording patch (pattern 1617) is recorded in the test pattern B. In this manner, in the present specification, the other recording patch refers to a recording patch that differs from the recording patch in the application amount of the reaction liquid per unit area. Note that if both of the two types of patterns 1617 have been detected in S224, the final adjustment value is the average value of the adjustment values respectively calculated from the two types of patterns 1617 (the recording patch, and the other recording patch).

In the second embodiment, the test patterns in which two types of pattern matching patterns that differ from each other in the application amount of the reaction liquid per unit area are disposed on the recording medium for which the permeation property of the reaction liquid is unknown are selected, and the two types of patterns are analyzed. This enables the recording position of the reaction liquid to be adjusted with high accuracy even on a recording medium for which the permeation property of the reaction liquid is unknown. In the first embodiment, both the test patterns A and B need to be printed on a recording medium for which the permeation property of the reaction liquid is unknown, and the user needs to determine an appropriate test pattern. On the other hand, in the second embodiment, the recording position of the reaction liquid can be adjusted by a single print of the test pattern C. Accordingly, it is possible to reduce the user operation time required for the recording position adjustment of the reaction liquid and the consumption of the recording medium.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A recording apparatus (501) comprising:
a recording means (507) for recording a test pattern on a recording medium (1001), the test pattern including: a recording patch in which a color ink containing a colorant and a reaction liquid containing a reaction component that aggregates the colorant are recorded so as to overlap each other; and a region in which the color ink is recorded around the recording patch; and
a control means (531) setting, according to a permeation property of the reaction liquid for the recording medium (1001), an application amount of the reaction liquid per unit area for the recording means to record the recording patch on the recording medium (1001), wherein
the control means (531) is configured to:
detect a position of the recording patch in an image obtained by reading the recording medium (1001) on which the test pattern is recorded; and
determine, based on the position of the recording patch, an adjustment value for adjusting a recording position of the reaction liquid.

2. The recording apparatus according to claim 1, wherein,
when the recording medium is a recording medium for which the reaction liquid has a high permeation rate, the control means sets the application amount of the reaction liquid per unit area to a maximum application amount of the reaction liquid per unit area.

3. The recording apparatus according to claim 1, wherein,
when the recording medium is a recording medium for which the reaction liquid has a low permeation rate, the control means sets the application amount of the reaction liquid per unit area to a minimum application amount of the reaction liquid per unit area.

4. The recording apparatus according to claim 1, wherein
the application amount of the reaction liquid per unit area relative to an application amount of the color ink per unit area in the test pattern is larger than an application amount of the reaction liquid per unit area relative to an application amount of the color ink per unit area in an actual printing pattern.

5. The recording apparatus according to claim 1, wherein,
when an instruction indicating that a user does not have information regarding the permeation property of the reaction liquid for the recording medium is received, the recording means records, on the recording medium, the test pattern including the recording patch and another recording patch that differs from the recording patch in application amount of the reaction liquid per unit area, and
the control means determines the adjustment value for adjusting the recording position of the reaction liquid based on a position of the recording patch and/or a position of the other recording patch detected from the image.

6. The recording apparatus according to claim 1, wherein
the recording apparatus is a line printer that performs recording using the recording means having a length corresponding to a width of the recording medium.

7. A method for a recording apparatus comprising:
recording (507, S102) a test pattern on a recording medium (1001), the test pattern including: a recording patch in which a color ink containing a colorant and a reaction liquid containing a reaction component that aggregates the colorant are recorded so as to overlap each other; and a region in which the color ink is recorded around the recording patch; and
setting (531), according to a permeation property of the reaction liquid for the recording medium (1001), an application amount of the reaction liquid per unit area to record the recording patch on the recording medium (1001) in the recording, wherein
in the setting,
detect (S112) a position of the recording patch in an image obtained by reading the recording medium (1001) on which the test pattern is recorded; and
determine (S114), based on the position of the recording patch, an adjustment value for adjusting a recording position of the reaction liquid.

8. A computer program comprising instructions which, when the program is executed by a computer, cause the computer to carry out the method of claim 7.
